(19) **Europäisches Patentamt / European Patent Office / Office européen des brevets**

(11) **EP 2 515 602 A1**

(12) # EUROPEAN PATENT APPLICATION
published in accordance with Art. 153(4) EPC

(43) Date of publication:
**24.10.2012 Bulletin 2012/43**

(21) Application number: **10851291.4**

(22) Date of filing: **01.11.2010**

(51) Int Cl.:
*H04W 88/02* (2009.01)

(86) International application number:
**PCT/CN2010/078289**

(87) International publication number:
**WO 2011/140787 (17.11.2011 Gazette 2011/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2010 CN 201010176013**

(71) Applicant: **ZTE Corporation
Shenzhen, Guangdong 518057 (CN)**

(72) Inventor: **CHENG, Wei
Shenzhen
Guangdong 518057 (CN)**

(74) Representative: **Kling, Simone et al
Lavoix Munich
Bayerstrasse 85a
80335 München (DE)**

(54) **METHOD, CONTROL APPARATUS AND WIRELESS TERMINAL FOR REDUCING RADIATION HARM OF WIRELESS TERMINAL**

(57) The disclosure discloses a method, a control apparatus and a wireless terminal for reducing radiation harm of a wireless terminal, belonging to the field of wireless radiation protection. The method comprises: a control apparatus detects whether there is an object approaching an antenna of a wireless terminal; and the control apparatus adjusts an output power of a transmitter of the wireless terminal connected with the antenna to an output protection power so as to reduce an SAR value of the antenna to a set value, when it is detected that there is an object approaching the antenna. The method can reduce radiation of the wireless terminal to human bodies, and is applicable to wireless communication terminals.

Fig. 1

a control apparatus detects whether there is an object approaching an antenna of a wireless terminal — 101

if yes, the control apparatus adjusts an output power of a transmitter of the wireless terminal connected with the antenna to an output protection power so as to reduce an SAR value of the antenna to a set value — 102

EP 2 515 602 A1

**Description**

**TECHNICAL FIELD**

The disclosure relates to the field of wireless radiation protection, particularly to a method, a control apparatus and a wireless terminal for reducing radiation harm of a wireless terminal.

**BACKGROUND**

With the development of information technologies, people pay more and more attentions to an electromagnetic radiation effect of a wireless communication terminal to human health while enjoying various conveniences brought by a wireless communication device. People attach great importance to an electromagnetic radiation index of the wireless communication terminal; in the conventional art, a value of Specific Absorption Rate (SAR) is configured to evaluate an radiation absorption degree of an actual organism; a unit of the SAR is W/kg, representing electromagnetic radiation energy absorbed by a unit mass of organism per unit time.

The SAR can be divided into a partial SAR and an average SAR; for a wireless terminal, total radiation power generally is small, wherein relatively great energy of radiation is absorbed when partially approaching an antenna.

The partial SAR can be expressed to be:

$$\mathrm{SAR} = \sigma E^2 \big/ \rho \ ;$$

where $\sigma$ represents an electric conductivity, $\rho$ represents a density and E represents an electric field strength.

From above formula, it can be seen that the SAR is in proportion to the square of the electric field strength; the electric field strength is decreased quickly as a range getting further; therefore, when a human body is very close to a radiator (e.g. antenna), the human body would absorb relatively great energy of radiation; in the conventional art, the problem of the radiation on a human body is solved by designing a wireless terminal antenna with low SAR values; however, radiation performance and the SAR value of the wireless terminal antenna are paradoxical; while the SAR value of the wireless terminal antenna is reduced, the radiation performance of the wireless terminal antenna is reduced too; in addition, people have a higher and higher demand on the SAR value, the SAR value of the current wireless terminal antenna is difficult to meet requirements of radiation protection for human body.

**SUMMARY**

The technical problem to be solved by the disclosure is to provide a method, a control apparatus and a wireless terminal for reducing radiation harm of a wireless terminal, capable of solving the problem that radiation performance and an SAR value of a wireless terminal antenna are paradoxical and further reducing the SAR value of the wireless terminal antenna.

In order to solve the technical problem above, an embodiment of the disclosure provides a technical scheme as follows.

On one aspect, a method for reducing radiation harm of a wireless terminal is provided, which comprises:

detecting, by a control apparatus, whether there is an object approaching an antenna of the wireless terminal; and

adjusting, by the control apparatus, an output power of a transmitter of the wireless terminal connected with the antenna to an output protection power so as to reduce a Specific Absorption Rate (SAR) value of the antenna to a set value, when it is detected that there is an object approaching the antenna.

The step of adjusting, by the control apparatus, the output power of the transmitter of the wireless terminal connected with the antenna to the output protection power so as to reduce the Specific Absorption Rate (SAR) value of the antenna to the set values may comprise: judging, by the control apparatus, whether the output power of the transmitter is greater than the output protection power; and reducing, by the control apparatus, the output power of the transmitter to the output protection power, when the output power of the transmitter is greater than the output protection power.

The output protection power may be the output power of the transmitter when the SAR value of the antenna is not greater than the set value.

The step of detecting, by the control apparatus, whether there is the object approaching the antenna of the wireless terminal may comprise: detecting, by the control apparatus, whether there is an object existing within a predefined range of the antenna.

The embodiment of the disclosure further provides a control apparatus, which comprises:

a sensing module, configured to detect whether there is an object approaching an antenna of a wireless terminal; and

a processing module, configured to adjust an output power of a transmitter of the wireless terminal connected with the antenna to an output protection power so as to reduce an SAR value of the antenna to a set value, when the sensing module detects that there is an object approaching the antenna.

The processing module may further comprise: a judging sub-module, configured to judge whether the output power of the transmitter is greater than the output protection power; and a controlling sub-module, configured to reduce the output power of the transmitter to the output protection power, when the output power of the transmitter is greater than the output protection power.

The output protection power may be the output power of the transmitter when the SAR value of the antenna is not greater than the set value.

The sensing module may be specifically configured to detect whether there is an object existing within a predefined range of the antenna.

The embodiment of the disclosure further provides a wireless terminal, which comprises a control apparatus, wherein the control apparatus may comprise:

a sensing module, configured to detect whether there is an object approaching an antenna of the wireless terminal; and

a processing module, configured to adjust an output power of a transmitter of the wireless terminal connected with the antenna to an output protection power so as to reduce an SAR value of the antenna to a set value, when the sensing module detects that there is an object approaching the antenna.

The processing module may further comprise: a judging sub-module, configured to judge whether the output power of the transmitter is greater than the output protection power; and a controlling sub-module, configured to reduce the output power of the transmitter to the output protection power, when the output power of the transmitter is greater than the output protection power.

The output protection power may be the output power of the transmitter when the SAR value of the antenna is not greater than the set value.

The embodiment of the disclosure has the following advantages:

in the scheme above, the control apparatus detects whether there is an object approaching an antenna of a wireless terminal, if yes, the control apparatus reduces transmit power of the wireless terminal, thereby reducing radiation on human bodies. While guaranteeing radiation performance of the antenna, the embodiments of the disclosure effectively reduce the radiation of the wireless terminal to human bodies, so as to solve the problem that an SAR value and the radiation performance of the wireless terminal antenna are paradoxical.

## BRIEF DESCRIPTION OF THE DRAWINGS

Fig. 1 shows a flowchart of a method for reducing radiation harm of a wireless terminal according to an embodiment of the disclosure;

Fig. 2 shows a structure diagram of a control apparatus according to an embodiment of the disclosure;

Fig. 3 shows another flowchart of a method for reducing radiation harm of a wireless terminal according to an embodiment of the disclosure;

Fig. 4 shows a structure diagram of the present wireless terminal;

Fig. 5 shows a structure diagram of a USB Dongle data card according to an embodiment of the disclosure; and

Fig. 6 shows a circuit diagram of a photoelectric proximity sensor applied by an embodiment of the disclosure.

## DETAILED DESCRIPTION

For a better understanding of the technical problem to be solved by the embodiment, the technical scheme and advantages of the disclosure, detailed description is provided below in conjunction with drawings and specific embodiments.

In view of the problem in the conventional art that an SAR value and radiation performance of a wireless terminal antenna are paradoxical, embodiments of the disclosure provide a method, a control apparatus and a wireless terminal for reducing radiation harm of a wireless terminal, capable of solving the problem that the radiation performance and the SAR value of the wireless terminal antenna are paradoxical and further reducing the SAR value of the wireless terminal antenna.

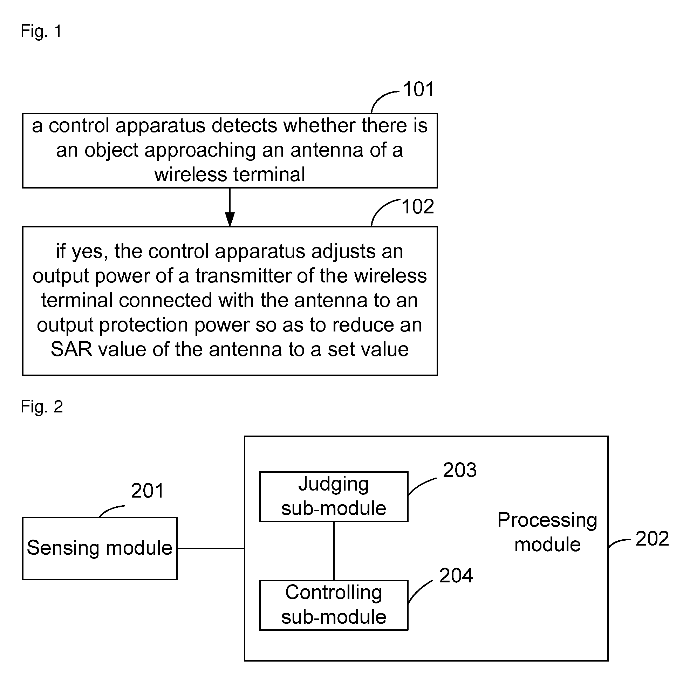

An embodiment of the disclosure provides a method for reducing radiation harm of a wireless terminal; as shown in Fig. 1, the method comprises the following steps.

Step 101: a control apparatus detects whether there is an object approaching an antenna of the wireless terminal.

Step 102: if yes, the control apparatus adjusts an output power of a transmitter of the wireless terminal connected with the antenna to an output protection power so as to reduce an SAR value of the antenna to a set value.

When the output power of the transmitter is the output protection power, the SAR value of the antenna is not greater than the set value.

The method for reducing radiation harm of a wireless terminal in the embodiment first detects whether there is an object approaching an antenna of a wireless terminal, and then reduces an transmit power of the wireless terminal when it is detected that there is an object approaching the antenna of the wireless terminal, thereby reducing radiation on human bodies. While guaranteeing radiation performance of the antenna, the embodiment of the disclosure effectively reduces the radiation of the wireless terminal to human bodies, solves the problem that the SAR value and the radiation performance of the wireless terminal antenna are paradoxical.

An embodiment of the disclosure further provides a control apparatus; as shown in Fig. 2, the apparatus comprises:

a sensing module 201, configured to detect whether there is an object approaching an antenna of the wireless terminal; and

a processing module 202, configured to adjust an output power of a transmitter of the wireless terminal connected with the antenna to an output protection power so as to reduce an SAR value of the antenna to a set value, when the sensing module 201 detects that there is an object approaching the antenna.

Wherein the processing module 202 further comprises:

a judging sub-module 203, configured to judge whether the output power of the transmitter is greater than the output protection power; and

a controlling sub-module 204, configured to reduce the output power of the transmitter to the output protection power, when the output power of the transmitter is greater than the output protection power.

When the output power of the transmitter is reduced to the output protection power, the SAR value of the antenna is not greater than the set value;
Wherein the sensing module 201 is specifically configured to detect whether there is an object existing within a predefined range of the antenna.

The control apparatus in the embodiment detects whether there is an object approaching an antenna of a wireless terminal, and reduces transmit power of the wireless terminal if there is an object approaching the antenna of the wireless terminal, thereby reducing radiation on human bodies. While guaranteeing radiation performance of the antenna, the embodiment of the disclosure effectively reduces the radiation of the wireless terminal to human bodies, solves the problem that the SAR value and the radiation performance of the wireless terminal antenna are paradoxical.

An embodiment of the disclosure further provides a wireless terminal, which comprises a control apparatus, wherein the control apparatus comprises:

a sensing module, configured to detect whether there is an object approaching an antenna of a wireless terminal; and

a processing module, configured to adjust output power of a transmitter of the wireless terminal connected with the antenna to output protection power when the sensing module detects that there is an object approaching the antenna so as to reduce an SAR value of the antenna to a set value.

Wherein the processing module further comprises:

a judging sub-module, configured to judge whether the output power of the transmitter is greater than the output protection power; and

a controlling sub-module, configured to reduce the output power of the transmitter to the output protection power, when the output power of the transmitter is greater than the output protection power.

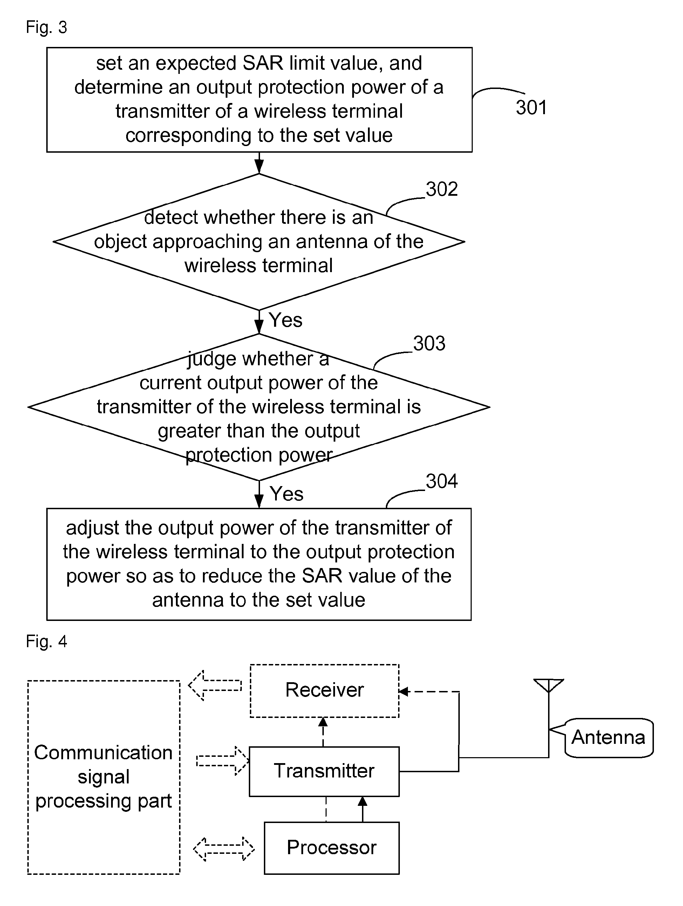

Wherein, the output protection power is the output power of the transmitter when the SAR value of the antenna is not greater than the set value.
The wireless terminal in the embodiment may be a wireless data card or a wireless router; the sensing module in the control apparatus can be set on an antenna of a wireless terminal; the processing module can be set on an original processor of the wireless terminal, or a new processor is added to realize the function of the processing module.
The wireless terminal in the embodiment detects whether there is an object approaching the antenna of the wireless terminal, and reduces the transmit power of the wireless terminal if there is an object approaching the antenna of the wireless terminal, thereby reducing radiation on human bodies. While guaranteeing the radiation performance of the antenna, the embodiment of the disclosure effectively reduces the radiation of the wireless terminal to human bodies, solves the problem that the SAR value and the radiation performance of the wireless terminal antenna are paradoxical.
The method in the embodiment of the disclosure for reducing radiation harm of a wireless terminal is further described below; as shown in Fig. 3, the method comprises the following steps.
Step 301: setting an expected SAR limit value, and determining an output protection power of a transmitter of the wireless terminal corresponding to the set value.
A control apparatus first sets an expected SAR limit value, and then measures the corresponding relationship between the SAR value of the wireless terminal and an output power of the transmitter of the wireless terminal, thereby determining the output protection power of the transmitter of the wireless terminal corresponding to the set value. Taking a data card for example, if the SAR value of the data card in a normal operating state is 1.82mW/g, and the set expected SAR value is 0.91 mW/g, then the output power of a transmitter of the data card is adjusted continuously, meanwhile, the SAR value of the data card is measured, and the corresponding relationship between the SAR value of the data card and the output power of the transmitter of the data card is recorded, and then it is determined that the SAR value of the data card is 0.91 mW/g after the output power of the transmitter is reduced by 3dB relative to the normal operating power, thus it can be determined that the output protection power of the data card is 3dB less than the normal operating power.

Step 302: detecting whether there is an object approaching an antenna of the wireless terminal; if yes, executing step 303.

As shown in Fig. 4, the present wireless terminal generally comprises a transmitter, an antenna and a receiver, a processor and a communication signal processing part; the control apparatus of the embodiments is installed with a sensing module near the antenna of the wireless terminal for detecting whether there is an object approaching the antenna and transmitting a signal to a processing module; specifically, the sensing module can judge whether there is an object approaching by detecting whether there is an object other than the wireless terminal existing within a predefined range of the antenna; if the sensing module detects that there is an object existing within 1cm around the antenna, it can judge that there is an object approaching the antenna. The predefined range can be adjusted according to actual requirements; generally, the predefined range can be set between 1 cm and 2cm.

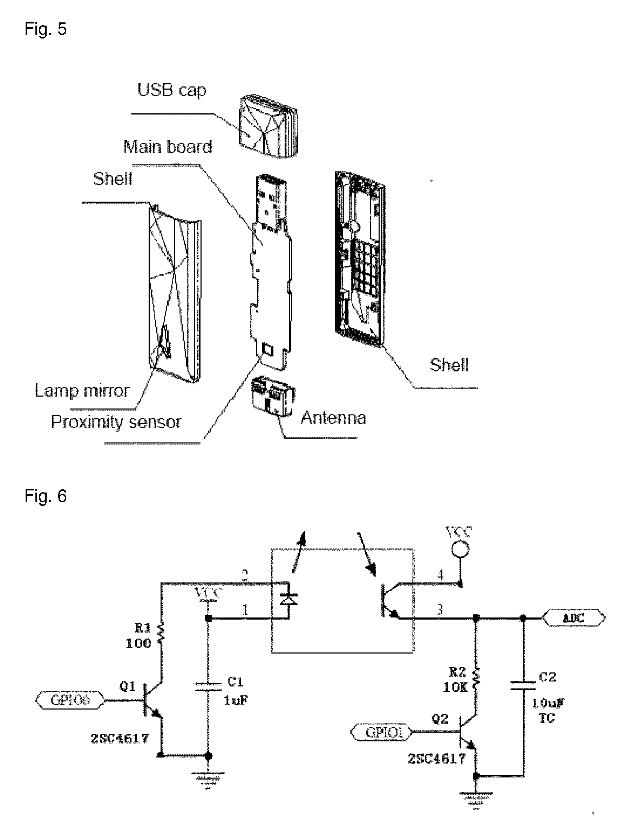

The sensing module may be an eddy proximity sensor, a capacitive proximity sensor, or a photoelectric proximity sensor. Taking a USB dongle-type data card for example, as shown in Fig. 5, an infrared photoelectric proximity sensor can be set near an antenna on the data card. The sensor realizes range detection by means of an optic reflection principle, wherein a chip of the sensor includes two tubes related to infrared light, namely, an infrared light-emitting diode (LED) and an infrared phototransistor; the infrared photoelectric proximity sensor has advantages of high reliability and low cost. The embodiment can adopt an infrared photoelectric proximity sensor RPR-0220 produced by ROHM Company, and its circuit diagram is shown in Fig. 6, when the infrared photoelectric proximity sensor works, GPIO1 is turned on first, samples via AD port and records an interference value X of current environment light; then GPIO0 is turned on, samples again via AD port and records a numerical value Y of this time too. If X=Y, it is indicated that no object is approaching; if Y>X+Δ, where Δ represents a threshold for reducing misjudgment, it is indicated that an object is approaching. Other types of proximity sensors can be adopted too, for example, an eddy proximity sensor, which only detects whether there is a conductive object approaching, in this way, the error triggering when non-human body approaches the antenna of the wireless terminal can be avoided.

If the sensing module detects that there is an object approaching the antenna of the wireless terminal, it transmits a signal to the processing module, and then step 303 is to be executed.

Step 303: judging whether a current output power of the transmitter of the wireless terminal is greater than the output protection power; if yes, executing step 304.

After receiving the signal from the sensing module, the processing module judges whether the current output power of the transmitter of the wireless terminal is greater than the output protection power. Generally, the wireless terminal has an embedded processor, which can be configured to realize the function of the processing module in the embodiment to save cost. If the wireless terminal does not have such a processor or does not have enough resources, an extra processor is needed to realize the function of the processing module in the embodiment. If the current output power of the transmitter of the wireless terminal is greater than the output protection power, step 304 is to be executed.

Step 304: adjusting the output power of the transmitter of the wireless terminal to the output protection power so as to reduce the SAR value of the antenna to the set value.

The processing module adjusts the output power of the transmitter of the wireless terminal to the output protection power so as to reduce the SAR value of the antenna to the set value, thereby reducing radiation of the wireless terminal to a human body when the human body approaches the wireless terminal. Taking a USB dongle-type data card for example, the data card adopts a radio frequency voltage control amplifier to control power, wherein the processing module can control gains of the radio frequency voltage control amplifier by a pulse density modulation signal, thereby controlling the output power of the transmitter.

After that, if it is detected that there is no object existing within the predefined range of the antenna, the sensing module transmits a signal to the processing module which will adjust the output power of the transmitter of the wireless terminal to the normal operating power.

Most of the time, no object would approach the wireless terminal; therefore, the embodiment can set the expected SAR value to be very low, even set the expected SAR to be 0, which further meets requirements of people on wireless terminal radiation reduction. The embodiment reduces the output power of the transmitter of the wireless terminal only when an object exists within a certain range of the antenna, thus the radiation performance of the wireless terminal antenna is not influenced; therefore, the problem that the radiation performance and the SAR value of the wireless terminal antenna are paradoxical can be solved.

The method embodiment is corresponding to the apparatus embodiment; for those not described in detail in the method embodiment can refer to the description of the related part in the apparatus embodiment; for those not described in detail in the apparatus embodiment can refer to the description of the related part in the method embodiment.

Those skilled in the art should understand that all or partial steps in the method of the embodiment above can be implemented by instructing related hardware by a program; and the program can be stored in a computer readable memory medium; when the program is executed, the steps of the method embodiment above are included; the memory medium includes a disk, a compact disc, a Read-Only Memory (ROM) or a Random Access Memory (RAM) and so on.

In each method embodiment of the disclosure, the sequence number of each step cannot limit the execution order of each step; for those skilled in the art, in the premise of not doing creative work, changes of the execution order of each step also are in the protection scope of the disclosure.

The above are only preferred embodiments of the disclosure; it should be noted that for those skilled in the art various improvements and modifications can be made without departing from the principle of the disclosure. These improvements and modifications are deemed to be included within the protection scope of the disclosure.

## Claims

1. A method for reducing radiation harm of a wireless terminal, comprising:

   detecting, by a control apparatus, whether there is an object approaching an antenna of the wireless terminal; and
   adjusting, by the control apparatus, an output power of a transmitter of the wireless terminal connected with the antenna to an output protection power so as to reduce a Specific Absorption Rate (SAR) value of the antenna to a set value, when it is detected that there is an object approaching the antenna.

2. The method according to claim 1, wherein the step of adjusting, by the control apparatus, the output power of the transmitter of the wireless terminal connected with the antenna to the output protection power so as to reduce the Specific Absorption Rate (SAR) value of the antenna to the set values comprises:

   judging, by the control apparatus, whether the output power of the transmitter is greater than the output protection power; and
   reducing, by the control apparatus, the output power of the transmitter to the output protection power, when the output power of the transmitter is greater than the output protection power.

3. The method according to claim 1 or 2, wherein the output protection power is the output power of the transmitter when the SAR value of the antenna is not greater than the set value.

4. The method according to claim 1, wherein the step of detecting, by the control apparatus, whether there is the object approaching the antenna of the wireless terminal comprises:

   detecting, by the control apparatus, whether there is an object existing within a predefined range of the antenna.

5. A control apparatus, comprising:

   a sensing module, configured to detect whether there is an object approaching an antenna of a wireless terminal; and
   a processing module, configured to adjust an output power of a transmitter of the wireless terminal connected with the antenna to an output protection power so as to reduce an SAR value of the antenna to a set value, when the sensing module detects that there is an object approaching the antenna.

6. The control apparatus according to claim 5, wherein the processing module further comprises:

   a judging sub-module, configured to judge whether the output power of the transmitter is greater than the output protection power; and
   a controlling sub-module, configured to reduce the output power of the transmitter to the output protection power, when the output power of the transmitter is greater than the output protection power.

7. The control apparatus according to claim 5 or 6, wherein the output protection power is the output power of the transmitter when the SAR value of the antenna is not greater than the set value.

8. The control apparatus according to claim 5, wherein the sensing module is specifically configured to detect whether there is an object existing within a predefined range of the antenna.

9. A wireless terminal, comprising a control apparatus, wherein the control apparatus comprises:

   a sensing module, configured to detect whether there is an object approaching an antenna of the wireless terminal; and
   a processing module, configured to adjust an output power of a transmitter of the wireless terminal connected with the antenna to an output protection power so as to reduce an SAR value of the antenna to a set value, when the sensing module detects that there is an object approaching the antenna.

10. The wireless terminal according to claim 9, wherein the processing module further comprises:

a judging sub-module, configured to judge whether the output power of the transmitter is greater than the output protection power; and a controlling sub-module, configured to reduce the output power of the transmitter to the output protection power, when the output power of the transmitter is greater than the output protection power.

11. The wireless terminal according to claim 9 or 10, wherein the output protection power is the output power of the transmitter when the SAR value of the antenna is not greater than the set value.

Fig. 1

101

a control apparatus detects whether there is an object approaching an antenna of a wireless terminal

102

if yes, the control apparatus adjusts an output power of a transmitter of the wireless terminal connected with the antenna to an output protection power so as to reduce an SAR value of the antenna to a set value

Fig. 2

201

Sensing module

Judging sub-module — 203

Controlling sub-module — 204

Processing module — 202

Fig. 3

```
┌─────────────────────────────────────────┐
│         set an expected SAR limit value, and      │
│    determine an output protection power of a      │   301
│         transmitter of a wireless terminal        │
│           corresponding to the set value          │
└─────────────────────────────────────────┘
                     │
                     ▼
            detect whether there is an          302
          object approaching an antenna of the
                 wireless terminal
                     │
                     ▼ Yes
              judge whether a               303
            current output power of the
          transmitter of the wireless terminal is
                greater than the output
                   protection power
                     │
                     ▼ Yes                   304
┌─────────────────────────────────────────┐
│     adjust the output power of the transmitter of  │
│    the wireless terminal to the output protection  │
│     power so as to reduce the SAR value of the     │
│            antenna to the set value               │
└─────────────────────────────────────────┘
```

Fig. 4

```
┌ ─ ─ ─ ─ ─ ─ ─ ┐        ┌ ─ ─ ─ ─ ─ ─ ─ ┐
│                │   ⇦    :    Receiver    :  ◄ ─ ─ ─ ─                        ▲
│                │        └ ─ ─ ─ ─ ─ ─ ─ ┘                                  ╱│╲
│                │              ▲                                          ╱  │  ╲
│ Communication  │              │                                            │
│     signal     │   ⇨    ┌───────────────┐                          ┌──────────────┐
│ processing part│        │   Transmitter  │ ───────────────────────│   Antenna    │
│                │        └───────────────┘                          └──────────────┘
│                │           │    ▲
│                │   ⇦    ┌───────────────┐
│                │        │    Processor   │
└ ─ ─ ─ ─ ─ ─ ─ ┘        └───────────────┘
```

Fig. 5

Fig. 6

| INTERNATIONAL SEARCH REPORT | International application No. |
|---|---|
| | PCT/CN2010/078289 |

**A. CLASSIFICATION OF SUBJECT MATTER**

H04W88/02(2009.01)i

According to International Patent Classification (IPC) or to both national classification and IPC

**B. FIELDS SEARCHED**

Minimum documentation searched (classification system followed by classification symbols)

IPC: H04W88/-

Documentation searched other than minimum documentation to the extent that such documents are included in the fields searched

Electronic data base consulted during the international search (name of data base and, where practicable, search terms used)

CNPAT; WPI; EPODOC; CNKI: radiation, terminal, antenna, power, protect, specific absorption rate, output

**C. DOCUMENTS CONSIDERED TO BE RELEVANT**

| Category* | Citation of document, with indication, where appropriate, of the relevant passages | Relevant to claim No. |
|---|---|---|
| Y | JP2005286627A（CANON KK）13 October 2005（13.10.2005） see the abstract, claims 1-8, figures 1-12, description paragraphs 18-80 | 1,4-5,8-9 |
| A | see the whole document | 2-3,6-7,10-11 |
| Y | CN1839321A（SOC APPL TECHNOLOGIQUES L'IMAGERIE MICRO） 27 September 2006（27.09.2006）see the abstract, claims 1-15, figures 1-6, description pages 3-5 | 1,4-5,8-9 |
| A | see the whole document | 2-3,6-7,10-11 |
| A | JP2009272907A（SONY ERICSSON MOBILE COMMUNICATIONS KK） 19 November 2009（19.11.2009）see the whole document | 1-11 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 20 January 2011(20.01.2011) | **10 Feb. 2011 (10.02.2011)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | HU,Xubing Telephone No. (86-10)62411861 |

Form PCT/ISA /210 (second sheet) (July 2009)

## INTERNATIONAL SEARCH REPORT
### Information on patent family members

| | International application No. |
| --- | --- |
| | PCT/CN2010/078289 |

| Patent Documents referred in the Report | Publication Date | Patent Family | Publication Date |
| --- | --- | --- | --- |
| JP2005286627A | 13.10.2005 | None | |
| CN1839321A | 27.09.2006 | FR2859064A1 | 25.02.2005 |
| | | WO2005019843A1 | 03.03.2005 |
| | | EP1656562A1 | 17.05.2006 |
| | | JP2007502973T | 15.02.2007 |
| | | US2007063905A1 | 22.03.2007 |
| | | US7782262B2 | 24.08.2010 |
| | | CN100504407C | 24.06.2009 |
| JP2009272907A | 19.11.2009 | None | |

Form PCT/ISA /210 (patent family annex) (July 2009)